# EUROPEAN PATENT APPLICATION

(11) **EP 3 320 767 A2**
(43) Date of publication of application: **16.05.2018**
(21) Application number: 17200904.5
(22) Date of filing: 09.11.2017
(51) Int. Cl.: A01D 90/12

(54) **LOADER WAGON AND METHOD FOR LOADING A LOADER WAGON**

(30) Priority: 09.11.2016 NL 2017749
(71) Applicant: Beheermaatschappij Schuitemaker B.V., 7461 AG Rijssen (NL)
(72) Inventor: Wilmink, Hermanus Gerhardus Joseph, 7461 AG Rijssen (NL)
(74) Representative: V.O.

(57) **Abstract**

Loader wagon and method for loading a loader wagonA loader wagon having a load carrying box (15) for receiving harvested halm material and a loading system (2) for gathering halm material and transporting gathered halm material into the load carrying box (15). The load carrying box (15) has a pivotable front wall (9). The loading system (2) has a pick-up conveyor (6) for picking-up halm material from a field (17), a feeding rotor (5) for feeding halm material from the pick-up conveyor (6) into the load carrying box (15) near a bottom end of the front wall (59, 9) and a guide wall (26) extending around a portion of the feeding rotor (5). The front wall (59, 9) is pivotable about a pivot axis (19, 25, 28) co-axial with the feeding rotor (5). The guide wall (26) is suspended so as to be pivotable with the front wall (59, 9) about an axis (19, 25, 28) co-axial with the feeder rotor (5) and for pivoting along with the rotor cleaner (4, 54). A method of loading such a loader wagon is also described.

## Description

### FIELD AND BACKGROUND OF THE INVENTION

The invention relates to a loader wagon according to the introductory portion of claim 1. In another embodiment, the invention relates to a loader wagon according to the introductory portion of claim 11. The invention also relates to a method according to the introductory portion of claim 15.

Such loader wagons and such a method are known from German Utility Model 202007004540. In this loader wagon, the front wall is pivotable such that a top end moves forwardly out of a vertical orientation. This allows the capacity of the load space to be increased by making use of space that is available between the bottom of the load space and the tractor. A guide wall of the known loader wagon extends around a portion of the feeding rotor and guides halm material upward into a loading channel leading to the load space.

### SUMMARY OF THE INVENTION

It is an object of the present invention to provide a loader wagon that allows a further improved use of the load space, in particular with respect to uniformity of compactness of the loaded halm material.

According to the invention, this object is achieved by providing a loader wagon according to claim 1 or a method according to claim 15.

In combination with the front wall and the feeding rotor being pivotable about a pivot axis co-axial with an axis of rotation of the feeder rotor, pivoting the guide wall about the axis co-axial with the axis of rotation of the feeder rotor along with the front wall provides a smooth transition of halm material from the guide wall to the front wall independently of the position of the front wall.

This allows more accurately increasing compression in an outlet area directly downstream of the feeding rotor when counter pressure from previously fed halm material is low and reducing compression when counter pressure from previously fed halm material is high. Moreover, improved control over the extent of compression allows a more uniform compression over the course of gathering a wagon load of halm material to be achieved.

If the rotor cleaner is also pivotable about the pivot axis co-axial with an axis of rotation of the feeder rotor, throughput of halm material into the load space is particularly constant because of a constant spacing between a downstream end of the guide wall and the rotor cleaner.

The invention can also be embodied in a loader wagon according to claim 11. By moving the top barrier between a retracted position and an extended position, the top barrier in the extended position projecting further from the front wall and being tilted further towards the load space than in the retracted position, the extent to which halm material is urged rearward and compressed can be varied more and controlled more accurately, while, on the one hand, the retracted top barrier projects high enough to effectively avoid that halm material drops out of the front end of the load space and, on the other hand, overall height of the loader wagon with the top barrier in the extended position is limited, which is advantageous for avoiding collisions with overhead objects. These effects are further enhanced in a loader wagon according to claim 1 due to the accurate and controlled throughput of halm material.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic cut-away side view of a front end of a first example of a loader wagon according to the invention coupled to a tractor;
Fig. 2 is a schematic cut-away side view of a front end of a second example of a loader wagon according to the invention coupled to a tractor;
Figs. 3A-3C are schematic cut-away side views of a front wall of another example of a loader wagon according to the invention provided with a top barrier projecting from a top end of the front wall; and
Fig. 4 is a schematic perspective view of the front wall and the top barrier in a position corresponding to Fig. 3A.

### DETAILED DESCRIPTION

In the drawings, mutually identical items are referred to by mutually identical reference numerals.

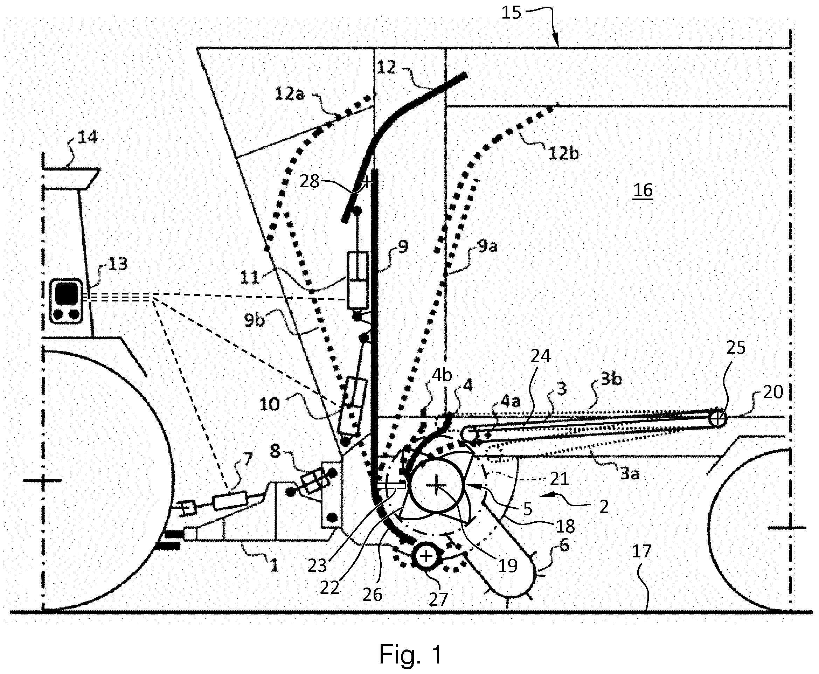

In Fig. 1, a first example of a loader wagon coupled to a tractor 14 via a drawbar 1 of the loader wagon is shown. The tractor 14 also has a power take-off shaft coupled to a drive shaft 7 of the loader wagon. The loader wagon system has a load carrying box 15 bounding a load space 16 for receiving and holding harvested halm material (not shown), such as mowed grass gathered from a field by the loader wagon. The load carrying box 15 has a pivotable front wall 9. Generally below the load carrying box 15, the loader wagon has a loading system 2 for gathering halm material and transporting gathered halm material into the load carrying box 15. The loading system 2 has a pick-up conveyor 6 for picking-up halm material from a field 17 and a feeding rotor 5 downstream of an upstream portion of the pick-up conveyor 6 for feeding halm material from the pick-up conveyor into the load carrying box 15 in a forward portion of the load space 16 near a bottom end of the front wall 9. The loading system further has side plates 18 between which the feeding rotor 5 is suspended rotatably about an axis 19.

The front wall 9 is pivotable between positions 9a, 9b about a pivot axis (in this example the same axis as the axis of rotation of the feeding rotor 5) at a level below a topmost part of a rotary contour 21 of the feeding rotor 5. This causes the portion of the front wall directly adjacent to the feeding rotor 5 to move also if the front wall 9 is pivoted. Thus, the stacking of halm material directly above the feeding rotor 5 and the tendency of halm material to drop backwards can be influenced particularly effectively, which allows obtaining more control over the extent of compression of the harvested material in an outlet area directly downstream of the rotor 5 and in particular a more uniform extent of compression over a wagon load of harvested material.

If the harvested material is very humid or even wet, it is generally advantageous to initially operate with the front wall in an orientation pivoted towards or in its most rearward position 9a, so that harvested material is urged backwards in an early stage and compressed to a small extent only. In particular in a later stage pivoting the front wall 9 towards or into its most forward position 9b may also contribute to reducing compression since the fed material is allowed to distribute over an area that is relatively large in forward and backward directions, so that it towers up to a lesser extent. This effect may be further enhanced by pivoting the front wall 9 back and forth, so that harvested material towered up above the rotor 5 is moved backwards from above the rotor 5. Here a balance should be respected between reduced compression by removing harvested material from above the rotor 5 and additional compression caused by compressing the harvested material in backwards direction. If the latter effect becomes too strong, it is advisable to discharge the loader wagon.

If the harvested material is very dry and springy, compression of the harvested material may be increased by initially holding the front wall 9 in a generally vertical orientation so that harvested material is not urged backwards in an early stage and towers up above the rotor so that it is compressed heavily. In particular in a later stage, holding the front wall 9 in a backwardly oriented orientation, so that harvested material is pressed against previously fed material to the rear of the rotor 5 and the front wall 9, also contributes to compressing the harvested material. In addition, when the loader wagon is nearly full, repeatedly pivoting the front wall 9 from a forward position 9b or more neutral position (e.g. a vertical position 9) towards the rearward position 9a, also contributes to compressing the harvested material in the load space 16. Such movement may be repeated several times while feeding of halm material is continued or interrupted. A particular advantage of this manner of compressing the harvested material is that increased damage to the plant material due to more intense contact with the rotor 5 is avoided or at least occurs to a lesser extent.

Since the front wall 9 is pivotable backward of a vertical orientation (preferably over more than 10°), compression of halm material can be reduced particularly effectively, since in such a backwardly pivoted position, the front wall 9 immediately urges fed halm material to drop backward of the rotor keeping the stacking height of halm material accumulating directly above the rotor 5 limited.

If, as in the present example, the pivot axis extends through the rotary contour 20 of the feeding rotor 5 and, more in particular, the pivot axis and an axis of rotation 19 of the feeding rotor 5 are substantially co-axial, a particularly effective control over harvest material compression is obtained and the spacing of a lower end of the front wall 9 relative to the rotary contour 21 of the rotor 5 remains constant as the front wall 9 is pivoted, ensuring a reliable throughput of halm material into the outlet area directly downstream of the rotor 5.

For obtaining more control over the extent of compression of the harvested material and in particular a more uniform extent of compression over a wagon load of harvested material in the outlet area directly downstream of the rotor 5, it is also advantageous if a rotor cleaner 4 for diverting halm material radially outwardly away from the feeding rotor 5 is pivotable about a pivot axis co-axial with an axis of rotation 19 of the feeder rotor 5. If the rotor cleaner 4 is in a forward position 4b, the halm material is urged more forward than if the rotor cleaner 4 is in a more backward position 4 or in an even further backward position 4a.

Pivoting of the rotor cleaner 4 does not affect the angle of attack of the tines 22 of the rotor 5 and halm material entrained thereby relative to leading faces of the rotor cleaner 4, so diversion of halm material off the rotor is not significantly affected by pivoting of the rotor cleaner 4.

The rotor cleaner 4 may for instance consist of a plurality of cleaning comb teeth that are interleaved with tines 22 of the feeding rotor 5.

Such a pivotable rotor cleaner 4 is preferably combined with a pivotable front wall 9, but may also be combined with a front wall that is stationary, pivotable about a pivoting axis above the rotary contour of the feeding rotor or movable in another fashion. Loading systems with such rotor cleaners (in non-pivotable form) are generally known from practice, for example in the form of loading systems of commercially available Schuitemaker Rapide loader wagons.

If the pivotable rotor cleaner 4 is combined with a front wall 9 pivotable about the axis of rotation 19 of the feeding rotor 5, for simplicity of construction and reliability, the front wall 9 and the rotor cleaner 4 may be mutually coupled for pivoting together. The coupling may be rigid so that the front wall 9 and the rotor cleaner pivot about the same pivoting angle or provide for a fixed or variable ratio other than one, between angular movement of the front wall 9 and of the rotor cleaner 4. Pivoting of the rotor cleaner 4 and of the front wall 9 may also be operated independently, for allowing further widening (rotor cleaner 4 and front wall 9 pivoting apart) and narrowing (rotor cleaner 4 and front wall 9 pivoting towards each other) of the outlet area directly downstream of the rotor.

As can be seen in Fig. 1, a curved lower end portion 26 of the front wall 9 forms a guide wall of the loading system 2 extending around a portion of the feeding rotor 5. This guide wall 26 is suspended so as to be pivotable with the rest of the front wall 9 about an axis co-axial with the axis of rotation 19 of the feeder rotor 5. Thus, a smooth transition of halm material from the guide wall 26 to the front wall 9 is obtained, independently of the position of the front wall 9, while further throughput of halm material into the load space is particularly constant. The guide wall 26 can for instance be a continuation of the front wall 9 fixed to the front wall 9, which allows a simple and reliable construction. At the upstream end of the guide wall 26 an inlet roller 27 is provided. The inlet roller 27 is suspended pivotably about the centre line 19 of the feeding rotor 5, so that it can pivot together with the guide wall 26 and the rest of the front wall 9 about an axis co-axial with the axis of rotation 19 of the feeder rotor 5.

The distance of the downstream end of the pick-up conveyor 6 to the field 17 determines the angle of the pick-up conveyor 6 relative to the floor 20 of the wagon. This angle is preferably adjusted to keep the inlet roller 27 at a constant average distance from the pick-up conveyor 6. In the present example, this is achieved by controlling an actuator 8 for adjusting the orientation of the drawbar 1 relative to the floor 20. If the drawbar 1 is pivoted so that its front end is raised, the front end of the loader wagon is lowered towards the field 17 and vice versa.

As is known as such, the loader wagon further has stationary knives 23. The knives 23 are arranged in row with spaces between the knives through which the tines 22 of the feeding rotor 5 pass when the feeding rotor 5 is rotated, so that the gathered material is cut into pieces, in particular halm sections of a length equal to or slightly larger than the spacing between neighbouring knives. The knives 23 are suspended so as to be pivotable about an axis co-axial with the axis of rotation 19 of the feeder rotor 5 and for pivoting along with the rotor cleaner 4. Thus, the knives 23 remain in a position at the upstream end of the rotor cleaner 4, even if the rotor cleaner 4 is pivoted.

The load carrying box 15 has a scraper floor 24 with conveyors 3 extending backwardly from a forward, upstream end adjacent to the feeding rotor 5. The scraper floor 24 is suspended so as to be pivotable about an axis 25 rearward spaced from the forward, upstream end and arranged for moving up or down together with a downstream end of the rotor cleaner 4 between positions 3a and 3b. Thus, the upstream (forward) end of the scraper floor 24 moves up and down with the passage between downstream end of the rotor cleaner 4 and the rotor 5, so that reliable transfer of gathered material to the scraper floor 24 is ensured in any position of the rotor cleaner 4. The vertical movement of the upstream end of the scraper floor 24 does not necessarily have to be over exactly the same distance as the vertical movement of the downstream end of the rotor cleaner 4 as it is pivoted.

To keep the forward end of the scraper floor 24 in particularly close proximity of the passage between downstream end of the rotor cleaner 4 and the rotor 5, regardless of its position, the length of the scraper floor 24 also adjusts in accordance with the movement of the passage between downstream end of the rotor cleaner 4 and the rotor 5 relative to the pivoting axis 25 of the scraper floor 24. Chain or belt tensioners (not shown) are provided to keep the chains or belts of the conveyors 3 tensioned.

Operation of the conveyors 3 also affects the extent to which the gathered halm material is compressed. If the conveyors 3 are stationary, compression builds up to a higher level and the faster the conveyors 3 are running the more compression is reduced.

An actuator 10 in the form of a hydraulic cylinder is coupled between the front wall 9 and a fixed frame portion of the loader wagon for driving pivoting of the front wall 9 and the rotor cleaner 4. Also other actuators, such as a linear motor, a rack and pinion drive, a spindle drive or a cable operated drive may be provided. Furthermore, provisions may also be made for operating adjustment of the position of the front wall 9 by human muscle force, e.g. in the form of a manually operable spindle drive or hydraulic jack or suitably dimensioned levers.

Above the front wall 9, a top barrier 12 is provided that is pivotably connected to the front wall 9 so as to be pivotable about an axis 28 near an upper end of the front wall 9 and to form a continuation of the front wall 9. By pivoting the top barrier 12 in a direction opposite of the sense of pivoting of the front wall 9, the top barrier 12 has an effective height that increases as the upper end of the front wall 9 is lowered due to pivoting out of a vertical orientation. Thus, spillage of gathered material over an upper end of the front boundary of the load space 16 is avoided effectively. For driving pivoting movement of the top barrier 12, an actuator 11, also in the form of a hydraulic cylinder is provided.

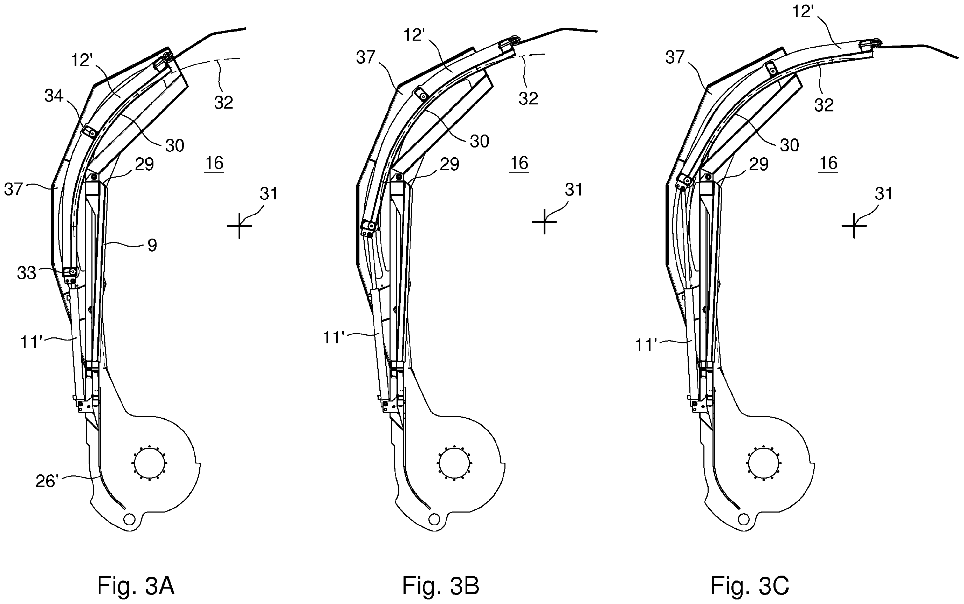

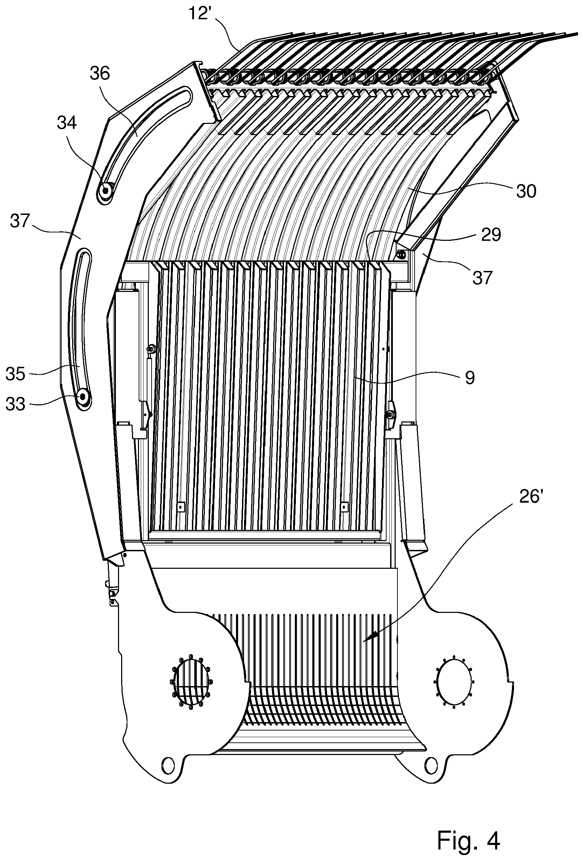

Another example of a loader wagon according to the invention is provided with a front barrier 9 and a top barrier 12' as shown in Figs. 3A-3C and 4. In these drawings, Figs. 3A-3C are cut-away side views in which, one of two frame members 37 on opposite sides of a wall portion of the front barrier 9 and a wall portion 30 of the top barrier 12' has been left out. The top barrier 12' is suspended relative to the front wall 9 for movement between a retracted position and an extended position. The top barrier 12' in the extended position (Fig. 3C) projects further from a top end 29 of the front wall 9 and is tilted further towards the load space than in the retracted position (Figs. 3A and 4). A front wall 9 and top barrier 12' in an intermediate position are shown in Figure 3B. When in the extended position, as shown in Figure 3C, the top barrier 12' projects further rearwardly from the front wall 9 than in more retracted positions, but nevertheless does not project significantly more upwardly than in the retracted position. Thus halm material is diverged backwardly into the load space 16 and is compressed particularly effectively in the load space when the top barrier 12' is in the extended position, while the top barrier in the extended position does not project upwardly much more than the top barrier in the retracted position. Keeping the top end of the top barrier at approximately the same level when moving between a retracted and an extended position is advantageous for avoiding that halm material falls out of the loading space when the top barrier is in the retracted position and halm material is compressed to a relatively limited extent, while the overall height of the loader wagon is not significantly increased when the top barrier is in the extended position, which is advantageous in view of traffic regulations generally allowing a maximum height of 4 m and, more generally for safety by avoiding collisions with overhead objects.

An actuator 11', in this example in the form of a hydraulic cylinder, is provided for driving movement of the top barrier 12' relative to the front wall 9.

In the example shown, the top barrier 12' is connected to the front wall 9 for pivoting about a tilt axis 31 rearwardly of the front wall 9. In the present example, the top barrier 12' is guided relative to the front wall 9 so that extension and retraction are in the form of a translator displacement combined with a rotation, which results in rotation about an instant axis of rotation 31 in an approximately constant position. It may however also be provided that the instant axis of rotation displaces as the top barrier moves between its extended and retracted positions.

In the present example, a portion of a top guide 30 formed by the top barrier 12' is curved about the tilt axis 31 and the top barrier 12' is suspended such that the curved portion of the top guide 30 is moved along a curved path 32 extending along that curved portion of the top guide 30 when the top barrier 12' is moved from its extended position to its retracted position or vice versa. Thus, the position of the curved portion of the top guide changes substantially only along a curved guide plane defined thereby, so that initial deflection of halm material passing past the top end 29 of the front wall is not substantially affected by repositioning of the top barrier 12' towards the retracted or extended positions.

In the present example, the top barrier 12' is guided relative to the front wall 9 for combining translator displacement with rotation by guide sliders 33, 34 mutually space in a plane of movement of the top barrier 12' that are guided along guide trajectories in the form of slots 35 and, respectively 36 in frame portions 37 that are fixed relative to the front wall 9. In this example, the guide trajectories 35, 36 are both curved. It is however also possible to provide for example that only one of the guide trajectories of each pair on one side of the front wall are curved or that both guide trajectories are straight and oriented in different direction for causing the rotation. Also, the guide trajectories may be provided by other guide means, such a guide rails or bars and on or both of the guide trajectories on each side may be provided on the top barrier, the corresponding slider being fixed to the frame member that is fixed to the front wall.

The loader wagon further has a control unit 13 for controlling the actuators 10 and 11. The control unit 13, in this example mounted on the tractor 14, has an input port for receiving a signal indicative of a torque driving rotation of the feeder rotor 5, in this example from a torque sensor of the drive shaft 7. The control unit 13 is programmed for reading the input signal indicative of the torque driving rotation of the feeder rotor 5 and controlling the actuators 10 and 11 in accordance with a value of the read input signal indicative of the torque driving rotation of the feeder rotor 5. Thus, the actuators 10, 11 may for instance be controlled for forward pivoting of the front wall 9 if the gathered material falls backwards too easily and is therefore compressed too little, which is indicated by a low torque driving the feeder rotor 5 and vice versa.

The control unit 13 may also have an input port for receiving a signal indicative of an amount of halm material in at least a forward portion of the load space 16, be programmed for reading the input signal indicative of the amount of halm material in at least the forward portion of the load space 16 and controlling the actuators 10, 11 in accordance with a value of the read input signal indicative of the amount of halm material in at least a forward portion of the load space 16. The signal indicative of the amount of halm material in at least a forward portion of the load space may for instance be a signal from a load sensor at the actuator 8 that indicates the couple exerted by the drawbar 1 or at least one sensor (e.g. optical and/or ultra sound) for detecting a volume of halm material in the load space 16 and/or the shape of the volume of halm material in the load space 16.

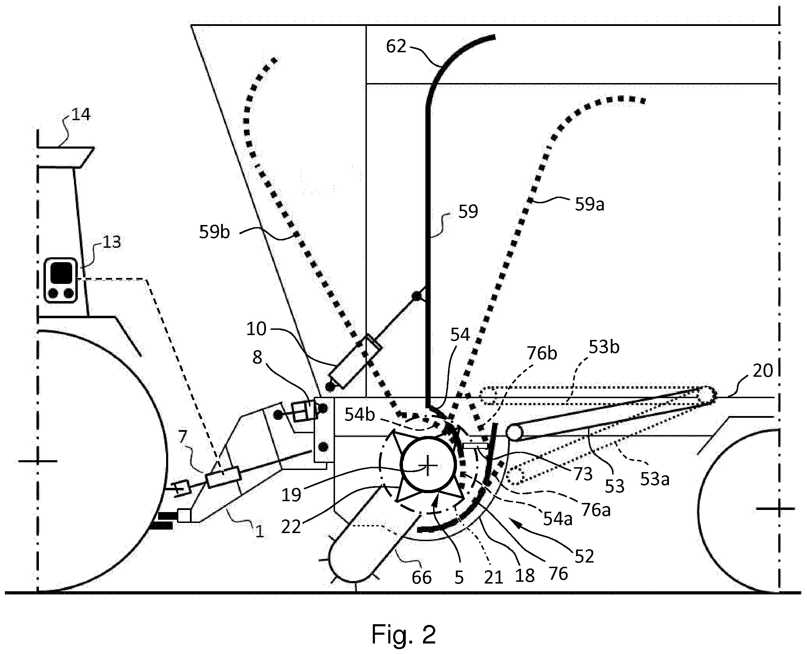

In Fig. 2, a second example of a loader wagon according to the invention is shown. Whereas the loader wagon according to Fig. 1 has a pick-up conveyor 6 which, relative to the driving direction, is trailing from the feeding rotor 5, the loader wagon according to Fig. 2 has a pick-up conveyor projecting from the feeding rotor 5 in the driving direction. In this example guide walls 76 of the loading system 2 extending around a portion of the feeding rotor 5 are separate from the front wall 59, but also pivotable about the axis of rotation 19 of the feeding rotor 5 between a most forward position 76b and a most rearward position 76a. Also in the example, the scraper floor is suspended so as to be pivotable about an axis rearwardly spaced from the forward, upstream end. The forward end of the scraper floor preferably moves between an upper position 53b and a downward position 53a so that it stays closely adjacent a downstream end of the guide 76 regardless whether it is in its forward position 76b, it rearward position 76a or any position in-between. To keep the forward end of the scraper floor in particularly close proximity of the downstream end of the guide 76, regardless of its position, the length of the scraper floor 24 also adjusts in accordance with the movement of the downstream end of the guide 76 relative to the pivoting axis of the scraper floor. Tensioners (not shown) are provided to keep the chains or belts tensioned.

The front wall 59 is pivotable between a most forward position 59b and a most rearward position 59a. The rotor cleaner 54 is pivotable together with the front wall 59 between a most forward position 54b and a most rearward position 54a, so that its downstream end is at a rearwardly facing surface of the front wall 59, regardless of the pivoting position of the front wall 59. This causes halm material to be effectively diverted off the tines 22 of the feeder rotor 5 to be guided further by the front wall 59.

In this example the top barrier 62 is formed by a curved barrier forming a continuation fixed relative to a top end of the front wall 59. In this and other (shown and not-shown) embodiments, the top barrier 62 may be replaced by the top barrier 12 of Figure 1 or the top barrier 12' as shown in Figures 3A-3C and 4. Since feeding rotor 5 rotates in a sense opposite to the sense of rotation of the feeding rotor 5 in Fig. 1, the knives 73 are also mounted on the opposite (rear vs. front) side of the feeding rotor 5.

Several features have been described as part of the same or separate embodiments. However, it will be appreciated that the scope of the invention also includes embodiments having combinations of all or some of these features other than the specific combinations of features embodied in the examples.

## Claims

1. A loader wagon comprising:
a load carrying box bounding a load space for receiving and holding harvested halm material, the load carrying box having a pivotable front wall;
a loading system for gathering halm material and transporting gathered halm material into the load carrying box, the loading system having a pick-up conveyor for picking-up halm material from a field, a feeding rotor downstream of at least an upstream portion of the pick-up conveyor and rotatable about an axis of rotation for feeding halm material from the pick-up conveyor into the load carrying box in a forward portion of the load space near a bottom end of the front wall and a guide wall extending around a portion of the feeding rotor, wherein the front wall is pivotable about a front wall pivot axis substantially co-axial with the axis of rotation of the feeding rotor; and
a rotor cleaner for diverting halm material radially outwardly from the feeding rotor;
**characterized in that** the guide wall is suspended so as to be pivotable with the front wall about the pivot axis co-axial with the axis of rotation of the feeder rotor and for pivoting along with the rotor cleaner.

2. A loader wagon according to claim 1, wherein the pick-up conveyor is trailing in driving direction and wherein the front wall is a continuation of the guide wall and fixed to the guide wall.

3. A loader wagon according to claim 1, wherein the pick-up conveyor is projecting in driving direction and wherein the guide wall is separate from the front wall.

4. A loader wagon according to any of the preceding claims, wherein the front wall and the rotor cleaner are coupled for pivoting in unison.

5. A loader wagon according to claim 4, wherein the rotor cleaner has a downstream end at a rearwardly facing surface of the front wall.

6. A loader wagon according to any of the preceding claims, further comprising knives interleaved with tines of the feeding rotor, wherein the knives are suspended so as to be pivotable about the axis co-axial with the axis of rotation of the feeder rotor and for pivoting along with at least the rotor cleaner or the front wall.

7. A loader wagon according to any of the preceding claims, wherein the load carrying box has a scraper floor with at least one conveyor extending backwardly from a forward, upstream end adjacent to the feeding rotor, wherein the scraper floor is suspended so as to be pivotable about an axis rearwardly spaced from the forward, upstream end and arranged for moving up or down together with a downstream end of the rotor cleaner or of a guide surface extending in circumferential sense closely outside of a segment of a rotary contour of the rotor.

8. A loader wagon according to one any of the preceding claims, further comprising at least one actuator for driving pivoting of at least the front wall and the rotor cleaner.

9. A loader wagon according to claim 8, further comprising a control unit for controlling the at least one actuator, said control unit including an input for receiving a signal indicative of a torque driving rotation of the feeder rotor, the control unit further being programmed for reading the input signal indicative of the torque driving rotation of the feeder rotor and controlling the actuator in accordance with a value of the read input signal indicative of the torque driving rotation of the feeder rotor.

10. A loader wagon according to claim 8 or 9, further comprising a control unit for controlling the at least one actuator, said control unit including an input port for receiving a signal indicative of an amount of halm material in at least a forward portion of the load space, the control unit further being programmed for reading the input signal indicative of the amount of halm material in at least a forward portion of the load space and controlling the actuator in accordance with a value of the read input signal indicative of the amount of halm material in at least the forward portion of the load space.

11. A loader wagon comprising:
a load carrying box bounding a load space for receiving and holding harvested halm material, said box comprising a front wall; and
a loading system for gathering halm material and transporting gathered halm material into the load carrying box, the loading system having a pick-up conveyor for picking-up halm material from a field and a feeding rotor downstream of at least an upstream portion of the pick-up conveyor for feeding halm material from the pick-up conveyor into the load carrying box in a forward portion of the load space adjacent to the front wall;
**characterized in that** the loader wagon comprises a top barrier projecting from the front wall, said top barrier being suspended relative to the front wall for movement between a retracted position and an extended position, said top barrier in said extended position projecting further from a top end of said front wall and being tilted further towards the load space than in said retracted position.

12. A loader wagon according to claim 11, wherein the top barrier is connected to the front wall for pivoting about at least one tilt axis rearwardly of the front wall.

13. A loader wagon according to claim 12, wherein at least a portion of a top ham material guide formed by the top barrier is curved about the at least one tilt axis and wherein the top barrier is suspended such that at least the curved portion of the top guide is moved along a curved path extending along that curved portion of the top guide when the top barrier is moved from its extended position to its retracted position or vice versa.

14. A loader wagon according to any of the claims 11-13, the top barrier is guided relative to front wall by guides and pairs of sliders on each side of the top barrier, the sliders being mutually spaced in a direction in a vertical plane, the guides and sliders being arranged for causing rotation of the top barrier relative to the front wall if the top barrier is retracted or extended relative to the front wall.

15. A method for loading halm material in a loader wagon with halm material, the loader wagon comprising:
a load carrying box bounding a load space receiving and holding harvested halm material, the load carrying box having a pivotable front wall; and
a loading system gathering halm material and transporting gathered halm material into the load carrying box, the loading system having a pick-up conveyor picking-up halm material from a field, a feeding rotor downstream of at least an upstream portion of the pick-up conveyor and rotatable about an axis of rotation for feeding halm material from the pick-up conveyor into the load carrying box in a forward portion of the load space near a bottom end of the front wall and a guide wall extending around a portion of the feeding rotor;
wherein the front wall is pivoted about a front wall pivot axis substantially co-axial with the axis of rotation of the feeding rotor;
**characterized in that** the guide wall is pivoted along with the front wall about the pivot axis co-axial with the axis of rotation of the feeder rotor along with the rotor cleaner.
